(19) Europäisches Patentamt / European Patent Office / Office européen des brevets

(11) **EP 2 225 461 B1**

(12) **EUROPÄISCHE PATENTSCHRIFT**

(45) Veröffentlichungstag und Bekanntmachung des Hinweises auf die Patenterteilung:
**14.03.2012 Patentblatt 2012/11**

(21) Anmeldenummer: **08865988.3**

(22) Anmeldetag: **03.12.2008**

(51) Int Cl.:
**F03D 7/04** (2006.01)   **F03D 7/02** (2006.01)

(86) Internationale Anmeldenummer:
**PCT/EP2008/010225**

(87) Internationale Veröffentlichungsnummer:
**WO 2009/083085 (09.07.2009 Gazette 2009/28)**

(54) **VERFAHREN ZUM BETREIBEN EINER WINDENERGIEANLAGE**

METHOD FOR OPERATING A WIND ENERGY SYSTEM

PROCÉDÉ PERMETTANT DE FAIRE FONTIONNER UNE ÉOLIENNE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.12.2007 DE 102007063082**

(43) Veröffentlichungstag der Anmeldung:
**08.09.2010 Patentblatt 2010/36**

(73) Patentinhaber: **REpower Systems AG
22297 Hamburg (DE)**

(72) Erfinder:
• **WORTMANN, Svenja
24768 Rendsburg (DE)**
• **KRÜGER, Thomas
24784 Westerrönfeld (DE)**

(74) Vertreter: **Grebner, Christian Georg Rudolf
Patentanwälte
Seemann & Partner
Ballindamm 3
20095 Hamburg (DE)**

(56) Entgegenhaltungen:
EP-A- 1 719 910       WO-A-2007/053031
WO-A-2007/089136    WO-A-2008/081232
DE-A1- 10 044 262

• UEDA Y ET AL: "Development of next generation 2MW class large wind turbines" MITSUBISHI HEAVY INDUSTRIES TECHNICAL REVIEW, XX, XX, Bd. 41, Nr. 5, 1. Oktober 2004 (2004-10-01), Seiten 1-4, XP003008409

## Beschreibung

Die Erfindung betrifft ein Verfahren zum Betreiben einer Windenergieanlage, wobei die Windenergieanlage einen Turm und einen Rotor mit wenigstens zwei mit dem Turm verbundenen Rotorblätter aufweist, wobei jedes Rotorblatt jeweils um eine Rotorblattachse mit einem vorbestimmten Rotorblattverstellwinkel einstellbar ist oder eingestellt wird und die Rotorblätter durch äußere Windbewegungen um eine quer zu den Rotorblattachsen vorgesehene Rotorachse rotierend angetrieben werden. Ferner betrifft die Erfindung eine Windenergieanlage.

Windenergieanlagen der Patentanmelderin sind mit der Bezeichnung 5M, MM92, MM82, MM70 sowie MD77 bekannt. Die ortsfest errichteten bzw. installierten Windenergieanlagen verfügen im Allgemeinen über einen Rotor mit drei daran gleichmäßig an einer Rotornabe angebrachten Rotorblättern. Mittels eines Betriebsführungssystems wird innerhalb eines vorgegebenen Windgeschwindigkeitsbereichs die Rotordrehzahl unter Verstellung des Rotorblattwinkels zur Einstellung einer Nennleistung bzw. einer vorgegebenen Leistung geregelt.

Zur Regelung der Drehzahl eines Rotors einer drehzahlvariablen Windenergieanlage sind verschiedene Ansätze bekannt. Hierbei wird üblicherweise zwischen zwei Betriebszuständen unterschieden, nämlich der Drehzahlregelung im Teillastbetrieb und im Volllastbetrieb. Üblicherweise findet im Teillastbetrieb eine so genannte "Momentenregelung" und im Volllastbetrieb eine so genannte "Pitch-Regelung" statt.

Unter Momentenregelung wird eine Drehzahlregelung verstanden, bei der zur Erreichung einer hohen Leistungsausbeute der Windenergieanlage die Drehzahl der Anlage im Teillastbereich auf das optimale Verhältnis zwischen Umfangsgeschwindigkeit des Rotors und Windgeschwindigkeit eingestellt wird. Die Leistungsausbeute wird gut über den Begriff Leistungsbeiwert $c_P$ beschrieben, der ein Quotient aus der Leistungsaufnahme der Anlage und der in der Luftbewegung enthaltenen Leistung ist.

Das Verhältnis der Umfangs- zu ungestörter Windgeschwindigkeit wird Schnelllaufzahl genannt. Die Rotorblätter sind dabei auf den Blattwinkel eingestellt, der das höchste Antriebsmoment an der Rotorwelle erzeugt. Die Drehzahl wird über das Gegenmoment am Generator beeinflusst. Das heißt, die Stellgröße für die Drehzahlregelung über die so genannte Momentenregelung ist das Drehmoment und insbesondere das Drehmoment am Generator, das umso höher ist, je mehr Leistung der Generator aus dem System bzw. der Windenergieanlage herausnimmt und in ein Netz einspeist.

Die als Pitch-Regelung bezeichnete Drehzahlregelung, die im Volllastbetrieb der Windenergieanlage greift, erfolgt über die Verstellung des Blattwinkels des Rotorblattes. Ist bei der Nennwindgeschwindigkeit das Nennmoment am Generator (Nennlast) erreicht, kann die Drehzahl durch weiteres Erhöhen des Generatormoments nicht mehr auf dem Arbeitspunkt gehalten werden. Daher wird der aerodynamische Wirkungsgrad der Blätter verschlechtert, indem sie aus ihrem optimalen Einstellwinkel herausgefahren werden. Diesen Vorgang nennt man "pitchen", von dem englischen Begriff to pitch = neigen. Die Drehzahl wird somit ab Erreichen des Nenngeneratormoments über den Einstellwinkel der Blätter beeinflusst.

In zahlreichen Patenten und Fachartikeln sind Regelungen von drehzahlvariablen Windenergieanlagen durch Blattverstellung (Pitch-Regelung) sowie Beeinflussung des Generatormoments (Momenten- oder Leistungsregelung) beschrieben. Bei allen bekannten Verfahren wird letztlich die Drehzahl der Windenergieanlage geregelt. Im Teillastbereich wird versucht, die Drehzahl der Windgeschwindigkeit nachzuführen, um so den Rotor bei konstantem Blattwinkel auf dem energetisch optimalen Betriebspunkt zu halten. Im Volllastbereich wird versucht, Drehzahl und Drehmoment konstant zu halten. Dabei wird die Drehzahl durch Variation des Blattwinkels geregelt.

Darüber hinaus ist bekannt, dass durch Böen oder turbulente, richtungswechselnde Winde, Windscherungen sowie Bauteilasymmetrien eine Windenergieanlage zu seitlichen Turmschwingungen angeregt werden kann. Dabei schwingt der Turm der Windenergieanlage mit der ersten Turmeigenfrequenz sowie der einfachen und dreifachen Rotordrehfrequenz.

In WO 2007/053031 A1 ist ein Verfahren zum Dämpfen von Turmschwingungen einer schwimmenden Windenergieanlage offenbart, wobei die Turmeigenschwingungen der Windenergieanlage gedämpft werden. Bei der Dämpfung der Turmeigenschwingungen soll dabei die Anregung von Eigenfrequenzen verhindert werden.

Des Weiteren offenbart EP-A-1 719 910 ein Verfahren zum Dämpfen der Schwingungen einer Windenergieanlage, wobei ein Rotoreinstellwinkel ermittelt wird, wobei der Rotoreinstellwinkel um einen Blatteinstellwinkel zur Erzeugung eines Schubs auf die Rotorblätter für die Dämpfung der Schwingung ergänzt wird.

Außerdem ist im Artikel von Y.UEDA, "Development of Next Generation 2MW Class Large Wind Turbines" (Mitsubishi Heavy Industries Ltd., Technical Review, Vol. 41 (No. 5 (Oktober 2004)) allgemein die Schwingungsdämpfung von Türmen von Windenergieanlagen beschrieben.

Ausgehend von diesem Stand der Technik besteht die Aufgabe der vorliegenden Erfindung darin, einen sicheren Betrieb einer Windenergieanlage auch bei turbulenten Winden im Bereich einer Windenergieanlage zu ermöglichen, wobei der Aufwand hierfür möglichst gering gehalten werden soll.

Die Aufgabe wird bei dem Verfahren zum Betreiben einer Windenergieanlage, wobei die Windenergieanlage einen Turm und einen Rotor mit wenigstens zwei mit dem Turm verbundenen Rotorblätter aufweist, wobei jedes Rotorblatt jeweils um eine Rotorblattachse mit einem vorbestimmten Rotorblattverstellwinkel einstellbar ist oder eingestellt wird und die Rotorblätter durch äußere Windbewegungen um eine quer zu den Rotorblattachsen vorgesehene Rotorachse rotierend angetrieben werden dadurch gelöst, dass der Rotorblattverstellwinkel für jedes Rotorblatt in Abhängigkeit von den lateralen Schwingungen des Turms unabhängig und/oder individuell derart verändert wird, dass die Amplitude der, insbesondere durch die äußeren Windbewegungen induzierten, lateralen Schwingungen des Turms gedämpft wird.

Die Erfindung beruht auf dem Gedanken, eine von der durch die Windbewegungen angeregten Schwingung im Bereich der Turmeigenfrequenz abhängigen bzw. einer mit der Schwingung im Bereich der Turmeigenfrequenz korrespondierenden Eingangsgröße, die während der Betriebsdauer variiert, für eine Regelung der Rotorblattverstellwinkel zu verwenden, wobei die eigenschwingungsabhängige Eingangsgröße zu einer Änderung des eingestellten Rotorblattverstellwinkels führt.

Durch die erfindungsgemäße Regelung werden die, insbesondere lateralen, Turmschwingungen in ihrer Amplitude fortlaufend reduziert, wobei hierfür die Regelung die Blattwinkel unter Berücksichtigung der, insbesondere seitlichen, Turmbewegung individuell vorgibt. Somit werden die am Turmkopf angreifenden seitlichen Kräfte in einer Reaktion auf die Auslenkungen des Turms durch die ausgeführten individuellen Verstellungen der Rotorblätter, die auch unabhängig von einander ausgeführt werden können, direkt beeinflusst, so dass die Schwingungen des Turms gedämpft werden. Dabei wird der Blattwinkel bzw. der Rotorblattverstellwinkel so gewählt, dass die resultierenden seitlich wirkenden Kräfte am Turm der Turmschwingung entgegenwirken. Die Verstellung bzw. Einstellung der Rotorblattwinkel der Rotorblätter wird vorzugsweise durch hydraulische oder elektrische bzw. elektro-mechanische Rotorblattverstellsysteme bzw. -einheiten oder -einrichtungen ausgeführt. Wenn im vorliegenden Zusammenhang von Schwingungen im Bereich der Turmeigenfrequenz(en) die Rede ist, dann sind dies bzw. betrifft dies im Rahmen der Offenbarung der Erfindung Schwingungen im Bereich der, insbesondere seitlichen, Turmeigenfrequenz(en) von $\pm$ 25 %, insbesondere $\pm$ 10 %, weiter vorzugsweise $\pm$ 5 %, der Eigenfrequenz(en), vorzugsweise der seitlichen Turmeigenfrequenzen. Insbesondere werden seitliche Schwingungen im Bereich der ersten und gegebenenfalls auch der zweiten seitlichen (Turm-)Eigenfrequenzen für die Dämpfung der Lateralschwingungen des Turms berücksichtigt. Im Rahmen der Erfindung können auch laterale Schwingungen im Bereich von höheren (seitlichen) Turmeigenfrequenzen berücksichtigt werden.

Bei den zu dämpfenden lateralen Schwingungen handelt es sich vornehmlich um Schwingungen des Turms, die durch äußere böige Windverhältnisse bzw. durch Windböen induziert werden. Diese durch Windböen hervorgerufenen Lateralschwingungen des Turms, die unter Normalbedingungen nicht entstehen bzw. auftreten, sind bislang kaum oder gar nicht bzw. unzureichend gedämpft, so dass langfristig beim Betrieb einer Windenergieanlage Beeinträchtigungen im Hinblick auf die Beanspruchung von mechanisch belasteten Komponenten entstehen, die bei einer unzulänglichen sowie nicht rechtzeitigen Erkennung zu dauerhaften Schäden an der Windenergieanlage führen und damit den Betrieb der Anlage gefährden. Insgesamt wird durch die erfindungsgemäße Lateralschwingungsdämpfung des Turms ein sicherer Betrieb der Windenergieanlage bei turbulenten Winden oder Windböen erreicht.

Dazu wird weiter vorgeschlagen, dass durch die individuellen Veränderungen des Rotorblattverstellwinkels der Rotorblätter eine Querkraft im Rotor erzeugt wird, durch die die lateralen Schwingungen des Turms, insbesondere lateralen Schwingungen im Bereich einer lateralen Eigenschwingungsfrequenz des Turms, gedämpft wird.

Insbesondere wird die Querkraft bzw. Größe der Querkraft in Abhängigkeit von der Amplitude oder den Amplituden der lateralen Schwingungen des Turms im Bereich der seitlichen Turmeigenfrequenz erzeugt bzw. ist die Größe der erzeugten Querkraft abhängig von der Amplitude der lateralen Turmschwingung des Turms im Bereich der seitlichen Turmeigenfrequenz, d.h. der Lateraleigenfrequenz des Turms.

Hierbei ist es weiter von Vorteil, wenn die Rotorblattverstellwinkel der Rotorblätter derart verändert oder angepasst werden, dass die im Rotor erzeugte Querkraft periodisch verändert wird. Dadurch werden die lateralen Schwingungen des Turms der Windenergieanlage in ihrer Amplitude reduziert bzw. in entsprechender Weise gezielt gedämpft.

Überdies zeichnet sich eine Weiterbildung des Verfahrens dadurch aus, dass die im Rotor erzeugte Querkraft periodisch mit einer Frequenz verändert wird, wobei insbesondere die Frequenz im Bereich der lateralen Turmeigenfrequenz liegt.

Um die lateralen Schwingungen des Turms einer Windenergieanlage in vorteilhafter Weise zu dämpfen, wird die Phasenlage der periodischen Veränderung der erzeugten Querkraft von einer, insbesondere dynamischen, Regeleinrichtung so eingestellt, dass die Querkraft der lateralen Turmeigenschwingung entgegen wirkt. Hierdurch wird eine Phasenverschiebung in der Regelung der Lateralschwingungsdämpfung erreicht bzw. ausgebildet, wobei hierbei (zeitliche) Verzögerungen bzw. die Signalverzögerungszeiten des Pitchsystems (Rotorblattverstellsystems) sowie dynamische Eigenschaften des Turms oder andere relevante Parameter, die die lateralen Schwingungen direkt oder indirekt beeinflussen, wie z.B. die Steifigkeit oder die Massenträgheit von Türmen, der Gondel, des Rotors sowie dynamische und/oder aerodynamische Effekte bzw. Parameter oder Betriebsparameter usw. berücksichtigt werden.

Gemäß einer Ausführungsform wird der Rotorblattverstellwinkel der Rotorblätter für jedes Rotorblatt mittels eines von der Schwingung im Bereich der Eigenschwingungsfrequenz des Turms abhängigen Verstellwinkelkorrekturwertes berichtigt, so dass ein neuer Rotorblattverstellwinkel für jedes Rotorblatt individuell ermittelt wird. Hierdurch ergibt sich während der Betriebsdauer der Windenergieanlage eine dynamische und zeitliche Regelung zur Dämpfung der Lateralschwingungen des Turms, wobei die Anpassung bzw. Änderungen der Rotorblattwinkel in vorbestimmten Zeitdauern erfolgt bzw. erfolgen.

Sind mehrere Rotorblätter an einer Windenergieanlage vorhanden, so ist gemäß einer weiteren Ausführungsform vorgesehen, dass nach Ermittlung der neuen individuellen Rotorblattverstellwinkel jedes Rotorblatts die Rotorblätter mit dem zugehörigen neuen ermittelten Rotorblattverstellwinkel eingestellt werden. Für mehrere Rotorblätter wird der entsprechende Rotorblattverstellwinkel mittels jeweils eines individuellen vorbestimmten Verstellwinkelkorrekturwertes berichtigt, so dass für jedes Rotorblatt ein neuer individueller korrigierter Rotorblattverstellwinkel ermittelt wird.

Entsprechend wird nach Ermittlung der neuen individuellen Rotorblattverstellwinkel jedes Rotorblatt mit dem zugehörigen neuen individuellen ermittelten Rotorblattverstellwinkel eingestellt. Durch die individuelle Ermittlung und Einstellung der entsprechenden Rotorblattverstellwinkel wird beispielsweise die entsprechende Position der Rotorblätter um die Rotorachse herum berücksichtigt, wodurch eine individuelle Blattverstellung erfolgt und somit gezielt Einfluss auf die am Turm angreifenden zur Schwingung anregenden Seitenkräfte genommen wird. Durch die entsprechende unabhängige Verstellung der einzelnen Rotorblätter wird die seitliche Turmschwingung in gewünschter Weise während des Betriebs der Windenergieanlage gedämpft.

Des Weiteren zeichnet sich das Verfahren dadurch aus, dass die individuellen Rotorblattverstellwinkel der Rotorblätter fortlaufend und/oder regelmäßig während der Rotation der Rotorblätter um die Rotorachse geändert oder eingestellt werden.

Darüber hinaus ist in einer Weiterbildung des Verfahrens vorgesehen, dass die Schwingung im Bereich der Eigenschwingungsfrequenz des Turms sowie die individuellen Rotorblattverstellwinkel fortlaufend und/oder regelmäßig, vorzugsweise in vorbestimmten Zeitabständen, während des Betriebs der Windenergieanlage ermittelt werden, um somit eine dynamische Anpassung bzw. Regelung der Einflussgrößen, die zu einer Lateralschwingung des Turms führen, auszuführen und die seitlichen Auslenkungen des Turms zu dämpfen.

Ferner ist es in einer Ausführungsform des Verfahrens bevorzugt, wenn die Rotorblattverstellwinkel der Rotorblätter fortlaufend in Abhängigkeit der ermittelten momentanen Schwingung im Bereich der Eigenschwingungsfrequenz des Turms geändert werden.

Weiterhin werden bevorzugterweise die Rotorblattverstellwinkel der Rotorblätter in Abhängigkeit der um die Rotorachse rotierenden Rotorblattpositionen der Rotorblätter geändert.

Vorteilhafterweise werden die Schwingungen im Bereich der Eigenschwingungsfrequenz des Turms mittels wenigstens eines Beschleunigungssensors erfasst, wobei hierzu vorteilhafterweise der Beschleunigungssensor in der Gondel bzw. dem Maschinenhaus einer Windenergieanlage, die auf dem Turm angeordnet sind oder werden, ausgebildet bzw. zugeordnet ist. Insbesondere sind im Turmkopf entsprechende Beschleunigungssensoren angeordnet, um die lateralen Schwingungen des Turms zu erfassen.

Zudem zeichnet sich das Verfahren dadurch aus, dass anhand der erfassten Schwingungen im Bereich der Eigenschwingungsfrequenz des Turms und eines für jeden Turm vorbestimmten, insbesondere individuellen, Verstärkungsfaktors ein maximaler Blattverstellwinkelkorrekturwert ermittelt wird. Dieser maximale Blattverstellungswinkel wird für die Berechnung bzw. Ermittlung eines neuen einzustellenden Blattverstellungswinkels unter Berücksichtigung der Position der Rotorblätter um die Rotorachse herum ermittelt, um entsprechend eine Veränderung des Rotorblatts zu bewirken.

Der maximale Blattverstellwinkelkorrekturwert ist dabei abhängig von der zeitlichen Entwicklung der Schwingung im Bereich der Eigenschwingungsfrequenz des Turms. Unter Vorgabe eines für alle Rotorblätter vorgegebenen Rotorblattwinkels wird die entsprechende Rotorblattwinkelposition als Antwort auf die dynamischen Eigenschaften des Windes sowie die durch die Windbewegung induzierten dynamischen Eigenschaften des Turms ausgeführt.

Ferner wird die Aufgabe gelöst durch eine Windenergieanlage, die zur Durchführung des voranstehend beschriebenen, erfindungsgemäßen Verfahrens ausgebildet ist. Zur Vermeidung von Wiederholungen wird auf die obigen Ausführungen ausdrücklich verwiesen.

Die Erfindung wird nachstehend anhand eines Ausführungsbeispiels unter Bezugnahme auf die Zeichnungen exemplarisch beschrieben, wobei bezüglich aller im Text nicht näher erläuterten erfindungsgemäßen Einzelheiten ausdrücklich auf die Zeichnungen verwiesen wird. Es zeigen:

Fig. 1    eine schematische Ansicht eines erfindungsgemäßen Schaltbilds;

Fig. 2    schematisch ein Blockschaltbild zur Generierung eines Anregungsäquivalenz aus einer lateralen Turmbeschleunigung;

Fig. 3    im linken Teil den schematischen Verlauf von diversen physikalischen Größen und im rechten Teil eine skizzierte Vorderansicht einer Windenergieanlage;

Fig. 4    schematisch den Verlauf der lateralen Turmpositionen mit und ohne Dämpfung der seitlichen Turmschwingungen und

Fig.5    schematisch den zeitlichen Verlauf von Turmeigenfrequenz und Drehfrequenz des Rotors.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

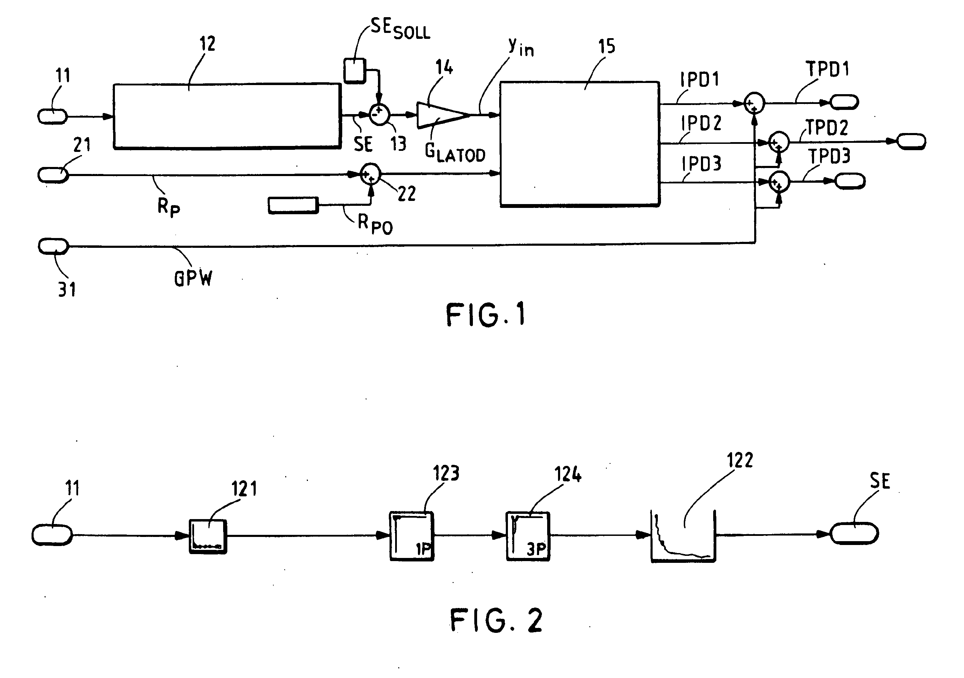

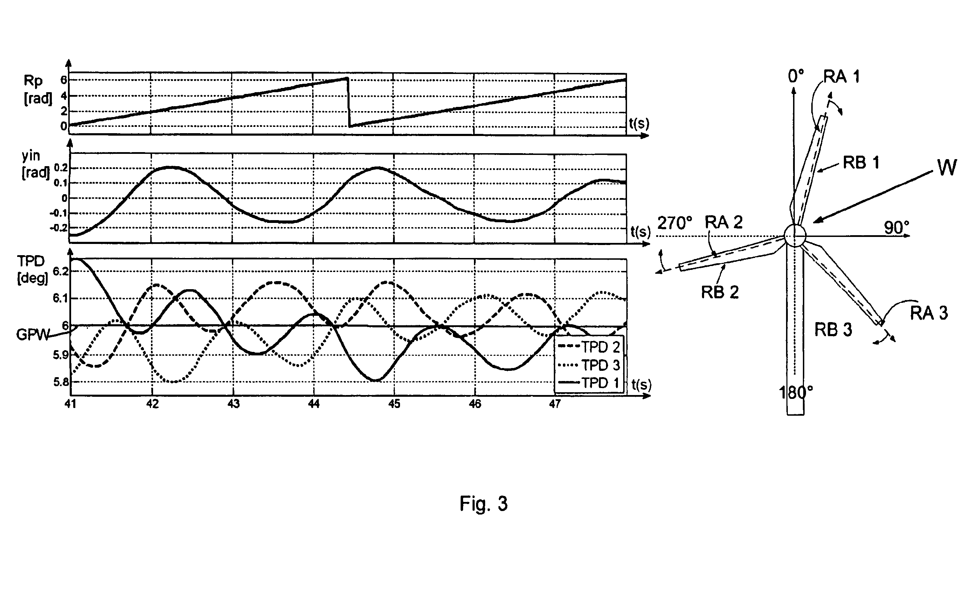

Fig. 1 zeigt schematisch ein Schaltbild, gemäß dem die individuellen Rotorblattverstellwinkel TPD1, TPD2 und TPD3 für entsprechende Rotorblätter RB1, RB2 und RB3 einer Windenergieanlage W (vgl. Fig. 3) ermittelt werden.

Hierbei verfügt in diesem Ausführungsbeispiel eine Windenergieanlage W (Typ MM) über einen dreiblättrigen Rotor, wie er im rechten Teil von Fig. 3 dargestellt ist. Der Rotor verfügt dabei über die Rotorblätter RB1, RB2 und RB3 und ist auf einem Turm T bzw. dem Turmkopf angeordnet. Die Rotordrehachse ist senkrecht zur Zeichenebene ausgebildet. Die Rotorblätter RB1, RB2 und RB3 sind um ihre Rotorblattachsen RA1, RA2 und RA3 drehbar am Rotor angeordnet. Mittels einer entsprechenden Verstelleinrichtung werden die Rotorblätter RB1, RB2 und RB3 mit einem vorbestimmten gemeinsamen Rotorblattwinkel GPW eingestellt.

Mittels eines Beschleunigungssensors 11 (vgl. Fig. 1), der beispielsweise in der Gondel bzw. dem Maschinenhaus einer Windenergieanlage W angeordnet ist, wird die seitliche Beschleunigung des Turmes T bzw. des Turmkopfes erfasst.

Der Beschleunigungssensor 11 übermittelt seine Messsignale an eine Auswerteeinheit 12, mittels der eine Anregungsgröße SE oder Verstellamplitude ermittelt wird, die mit der gemessenen Beschleunigung des Beschleunigungssensors 11 korreliert. Hierbei wird insbesondere die schwingungsabhängige Anregungsgröße SE fortlaufend während des Betriebs der Windenergieanlage erfasst. Mittels der Auswerteeinheit 12 wird insbesondere eine Anregungsgröße SE ermittelt, die von der lateralen Turmbeschleunigung bzw. Turmbewegung (Turmschwingung) abhängt. Die Generierung der Anregungsgröße SE bzw. des Anregungsäquivalenz aus der lateralen Turmbeschleunigung ist schematisch in Fig. 2 dargestellt.

Hierbei werden die Messsignale des Beschleunigungssensors 11 in der Auswerteeinheit 12 mittels eines Bandpassfilters 121 bezüglich einer ersten Turmeigenfrequenz gefiltert und anschließend mittels eines Phasenverschiebungsglieds 122 derart in der Phase verschoben, dass sich die Anregungsgröße SE ergibt.

Optional, wie dies in Fig. 2 dargestellt ist, können nach der Filterung der Eigenfrequenz durch den Bandpass 121 mittels eines Notchfilters 123 oder mehrerer Notchfilter 123, 124 die 1P und 3P Frequenzen aus dem seitlichen Turmbeschleunigungssignal herausgefiltert werden. Hierbei werden die Sensorsignale mittels der Filter 123, 124 gefiltert, wobei die Filter 123, 124 eine (gute) Durchlässigkeit im Bereich einer seitlichen Turmeigenfrequenz, insbesondere der ersten Turmeigenfrequenz und gegebenenfalls höherer seitlicher Turmeigenfrequenzen, aufweisen.

Durch die vom Phasenverschiebungsglied 122 ausgeführte Phasenverschiebung, durch die die Anregungsgröße SE beeinflusst wird, ist es möglich, bei der Anregungsgröße die (zeitlichen) Verzögerungen des Pitchsystems oder die Signalverzögerungszeiten sowie die Dynamik bzw. die mechanischen (sowie dynamischen) Eigenschaften, wie z.B. die Steifigkeit und/oder die Masseträgheiten) von wichtigen Komponenten der Windenergieanlage (Turm, Gondel, Rotor etc.), auf die sich die lateralen Schwingungen des Turms auswirken, oder von anderen Größen wie z.B. die Aerodynamik oder dynamische sowie aerodynamische (Betriebs-) Parameter in entsprechender Weise zu berücksichtigen und mit in die erfindungsgemäße aktive Dämpfung der Lateralschwingungen für die Verstellamplitude einzubeziehen, um den Dämpfungseffekt zu maximieren.

Die Verwendung der Notchfilter 123, 124 erfolgt insbesondere dann, wenn davon auszugehen ist, dass bei Betrieb der Windenergieanlage mit häufigem Auftreten von so genannten 1 P und 3P Frequenzen gerechnet werden muss.

In einer einfachen Ausführungsform wird von der Zwischenschaltung der Notchfilter 123, 124 zwischen dem Bandpass 121 und dem Phasenverschiebungsglied 122 abgesehen. Durch das Phasenverschiebungsglied 122 bzw. die phasenverschobene Anregungsgröße SE wird ein schnelleres Abklingen der angeregten Schwingung des Turmes erreicht.

Die in der Auswerteeinheit 12 ermittelte Anregungsgröße SE bzw. das Stimulationsäquivalent wird anschließend in einer Vergleichseinrichtung 13 mit dem Sollwert $SE_{SOLL}$ der Anregungsgröße SE verglichen, wobei die Differenz zwischen den beiden Werten ermittelt wird.

Im vorliegenden Ausführungsbeispiel wird der Sollwert $SE_{SOLL}$ der Anregungsgröße SE zu 0 (Null) gesetzt, da die Turmschwingung gedämpft werden soll, wodurch die Anregung auf Null reduziert werden muss bzw. die Schwingung bzw. die Schwingungsamplitude des Turms gedämpft werden soll. Hierbei gilt insbesondere die folgende Gleichung:

$$y_{in} = (SE_{SOLL} - SE) * G_{LATOD} = -SE * G_{LATOD}$$

Insbesondere ist gemäß der Erfindung ein linearer Zusammenhang zwischen der Verstellamplitude und der bzw. den gemessenen Beschleunigungen bevorzugt.

Bei diesem Soll-Istwert-Vergleich verstärkt der Verstärkungsfaktor $G_{LATOD}$ die Regeldifferenz. Die Verstärkung des Soll-IstwertVergleichs mit der Größe $G_{LATOD}$ erfolgt in der Verstärkereinheit 14.

Unter der Voraussetzung, dass der Sollwert $SE_{SOLL}$ der Anregungsgröße SE zu 0 (Null) gesetzt wird, wird als eigenfrequenzabhängige Eingangsgröße das Signal $y_{in}$ auf eine Transformationseinheit 15 gegeben.

Die optimale Verstärkung bzw. der Verstärkungsfaktor $G_{LATOD}$ ist dabei abhängig von den Turmeigenschaften wie der ersten Turmfrequenz sowie der Verstärkung des Beschleunigungssignals durch die bisherige Signalaufbereitung. Insbesondere werden bei dem Verstärkungsfaktor $G_{LATOD}$ schwingungsrelevante Einflussgrößen und/oder spezifische Eigenschaften des Turms berücksichtigt. Beispielsweise ergibt sich für eine untersuchte Windenergieanlage des Typs MM der Patentanmelderin eine optimale Verstärkung für $G_{LATOD}$ von ungefähr 4,5 °/(m s$^2$).

Für die Anregungsgröße bzw. das Anregungsäquivalent SE ist dabei vorauszusetzen, dass die gemessene seitliche Turmbeschleunigung deutlich in der Phase verschoben werden muss, um eine effektive und schnelle laterale Schwingungsdämpfung zu erreichen. Hierbei hängt die optimale Phasenverschiebung der Anregungsgröße SE von der Verzögerung durch das so genannte Pitchsystem und den Turmeigenschaften sowie der ersten Turmeigenfrequenz ab.

Beispielsweise hat sich für eine MM-Windenergieanlage der Patentanmelderin mit einer ersten Turmeigenfrequenz von ca. 0,3275 Hz und einer Verzögerung von ca. 300 ms durch das Pitchsystem eine Gesamtphasenverschiebung der lateralen Turmbeschleunigung von 70° bis 80° bezogen auf die Turmschwingungsfrequenz als optimal herausgestellt. Denkbar sind auch eine weitere Phasenverschiebung um 180° und eine Aufschaltung eines inversen Signals. Diese Phasenverschiebung kann entweder durch die Filter, durch Beaufschlagung der Rotorposition mit einem Offset oder mittels Kombination aus beidem erzeugt werden.

In einer weiteren Ausführungsform wird das Beschleunigungssignal bereits vorab zur Beseitigung von Messrauschen etc. gefiltert, wobei dadurch eventuell verursachte Phasenverschiebungen zu berücksichtigen sind.

Der Betrag der optimalen Phasenverschiebung wird vorteilhaft durch Simulationsrechnungen bestimmt, bei denen die Phasenverschiebung und die Verstärkung $G_{LATOD}$ so optimiert werden, dass sich eine (ausreichende) vorbestimmte bzw. vorbestimmbare Dämpfung mit minimaler Regelaktivität ergibt. Hierzu können Verfahren zur Parameteroptimierung genutzt bzw. verwendet werden. Alternativ können die Reglereinstellungen auch durch Feldversuche optimiert werden, was allerdings zeitaufwändig ist.

Darüber hinaus erhält die Transformationseinheit 15 als weitere Eingangsgröße die von einem Sensor 21 erfasste Rotorposition $R_P$, die in einer optionalen Operationseinheit 22 mit einem Offset der Rotorposition $R_{PO}$ beaufschlagt wird. Hierbei kann der Offset der Rotorposition vorbestimmt bzw. frei wählbar sein.

Aus den Eingangsgrößen $y_{in}$ und der (optional geänderten) Rotorposition $\omega t = R_P + R_{PO}$ werden in der Transformationseinheit 15 mittels einer Drehtransformation die individuellen Verstellwinkelkorrekturwerte IPD1, IPD2, IPD3 ermittelt. Die Rotorposition wird von einer im Wesentlichen sinusförmigen Schwingung des Beschleunigungssignals überlagert. Dadurch ergibt sich (da keine Schwingung mit Rotordrehzahl) eine sich ständig ändernde Phasenverschiebung zwischen Rotorposition und maximalem Blattwinkel.

Hierbei gelten für die individuellen Verstellwinkelkorrekturwerte IPD1, IPD2, IPD3 unter Berücksichtigung der ermittelten Turmeigenfrequenz die folgenden Gleichungen:

$$IPD1 = y_{in} * \cos(\omega t) \qquad \text{(für Rotorblatt RB1)}$$

$$IPD2 = y_{in} * \cos\left(\omega t - \frac{2}{3}\pi\right) \qquad \text{(für Rotorblatt RB2)}$$

$$IPD3 = y_{in} * \cos(\omega t + \frac{2}{3}\pi) \qquad\qquad \text{(für Rotorblatt RB3)}$$

Der individuelle gesamte Blattverstellungswinkel für jedes Rotorblatt RB1, RB2 und RB3 ergibt sich aus der Addition zu den von einer Pitchregelung 31 vorgegebenen kollektiven bzw. gemeinsamen Blattverstellwinkel GPW für jedes einzelne Rotorblatt.

Somit ergeben sich die neuen Rotorblattverstellwinkel TPD1, TPD2 und TPD3 nach Filterung der seitlichen Beschleunigungssignale mit einem Bandpass und der Verschiebung der Phase mittels Tiefpass für die verschiedenen drei Rotorblätter RB1, RB2, RB3 wie folgt:

$$TPD1 = GPW - SE * G_{LATOD} * \cos(\omega t) \qquad\qquad \text{(für RB1)}$$

$$TPD2 = GPW - SE * G_{LATOD} * \cos(\omega t - \frac{2}{3}\pi) \qquad\qquad \text{(für RB2)}$$

$$TPD3 = GPW - SE * G_{LATOD} * \cos(\omega t + \frac{2}{3}\pi) \qquad\qquad \text{(für RB3)}$$

Darüber hinaus ist in einer weiteren Ausführungsform der Regelung des Rotorblattverstellwinkels die maximale Winkeldifferenz zwischen den einzelnen Rotorblättern auf einige Grad begrenzt, um zu starke Bewegungen der Rotorblätter bzw. Pitchbewegungen zu vermeiden. Die obere und untere Grenze für die Verstellbewegungen der Rotorblätter werden hinsichtlich der Rotor- und Turmbelastung und Belastungen des Rotorblattverstellsystems vorbestimmt. In Versuchen hat sich gezeigt, dass eine derartige Begrenzung für die Rotorwinkelverstellkorrekturwerte u. U. nicht notwendig ist. Dies hängt beispielsweise von den Eigenschaften der Windenergieanlage ab.

Um den zusätzlichen Verschleiß für das Blattverstellsystem gering zu halten, hat es sich als vorteilhaft herausgestellt, das erfindungsgemäße Verfahren nur bei Bedarf zu aktivieren.

Einerseits wird der Einsatz vorteilhaft auf kritische Betriebsbereiche begrenzt. Bei Onshore-Anlagen sind dies z.B. Hoch- u. Abfahren des Rotors mit Durchfahren der lateralen Turmeigenfrequenz sowie der Nennleistungsbereich. Die Aktivierung im Nennleistungsbereich kann z.B. vorteilhaft direkt durch die Generatorleistung erfolgen, z.B. bei Überschreitung von 90% oder 95%, insbesondere auch 98% oder 99,5% der Nennleistung. Alternativ kann die Aktivierung auch durch Überwachung des kollektiven Blattwinkels bzw. in Abhängigkeit des gemeinsamen Blattverstellungswinkels GPW erfolgen. Geeigneter Weise wird eine entsprechende erfindungsgemäße Regelung bei einem gemeinsamen Blattverstellungswinkel GPW von einem Wert von GPW ≥ 1° oder 2° bis 8°, insbesondere 3°, 4°, oder 5°, aktiviert.

Bei Offshore-Anlagen besteht ein weiterer kritischer Betriebsbereich, wenn Wellen quer zur Windrichtung auf die Tragstruktur einer Windenergieanlage einwirken. Dies kann durch Wellensensoren erkannt werden, die abhängig von der Wellenrichtung (relativ zum Wind) und Wellenhöhe die erfindungsgemäße Regelung aktivieren.

Außerdem wird der Einsatz bzw die Verwendung der Regelung vorteilhaft auf die Überschreitung eines vorbestimmten Schwingungsniveaus begrenzt, d.h. es wird regelungstechnisch ein Totband der Schwingung des Turms eingefügt, auf das der Regler bzw. die Regeleinrichtung nicht reagiert. Vorteilhafte Schwellwerte für eine gemessene Turmkopfbeschleunigung können je nach Steifigkeit des Turms sowie anderer Größen der (dynamischen) Eigenschaften der Windenergieanlage bzw. des Turms, die die lateralen Schwingungen beeinflussen, und/oder den Eigenschaften des Blattverstellsystems im Bereich von 0,01 m/s² und 0,6 m/s² liegen, insbesondere 0,2 m/s² oder 0,3 m/s². Mit dieser Maßnahme wird außerdem verhindert, dass zu geringe Amplituden oszillierender Blattverstellwinkel vorgegeben werden, die dann aufgrund des Getriebespiels in den Blattverstellantrieben nicht nachgefahren werden können.

Insgesamt sollte gemäß der Erfindung der sich einstellende individuelle Rotorblattwinkel stets so groß sein, dass keine so genannten Stalleffekte; d.h. Abreißen der Umströmung des Rotorblatts, an der Anlage auftreten. Die Änderung bzw. die zeitliche Änderung der Rotorblattverstellwinkel wird vorteilhafterweise auf die durch das Pitchsystem maximal zulässigen Raten begrenzt.

In Figur 3 ist im linken Bereich schematisch und beispielhaft der zeitliche Verlauf der Rotorposition $R_P$ [rad] sowie der Eingangsgröße $y_{in}$ [rad] sowie der daraus entsprechend errechnete Rotorblattverstellwinkel TPD1 für das Rotorblatt RB1, der Rotorblattverstellwinkel TPD2 für das Rotorblatt RB2 und der Rotorblattverstellwinkel TPD3 für das Rotorblatt RB3 bei einem kollektiven und konstanten Pitchwinkel GPW gezeigt.

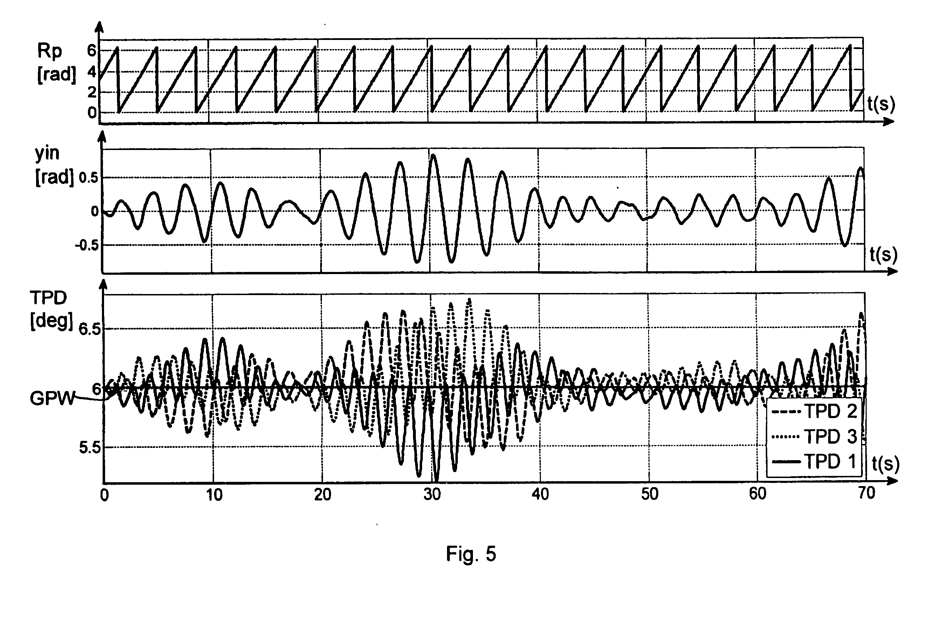

Figur 5 zeigt die gleichen Zusammenhänge wie Figur 3 für eine längere Zeitdauer. Es ist zu erkennen, wie die Überlagerung der Turmeigenfrequenz und der Rotordrehfrequenz zur sich ständig ändernden Phasenverschiebung zwischen Rotorposition und maximaler Blattwinkel führt: zum Zeitpunkt t = 20 s befindet sich der Blattwinkel von Rotorblatt RB1 bei Rotorposition 6 rad etwa auf einem Maximum, 10 Sekunden später bei t = 30 s bei gleicher Rotorposition etwa auf einem Minimum.

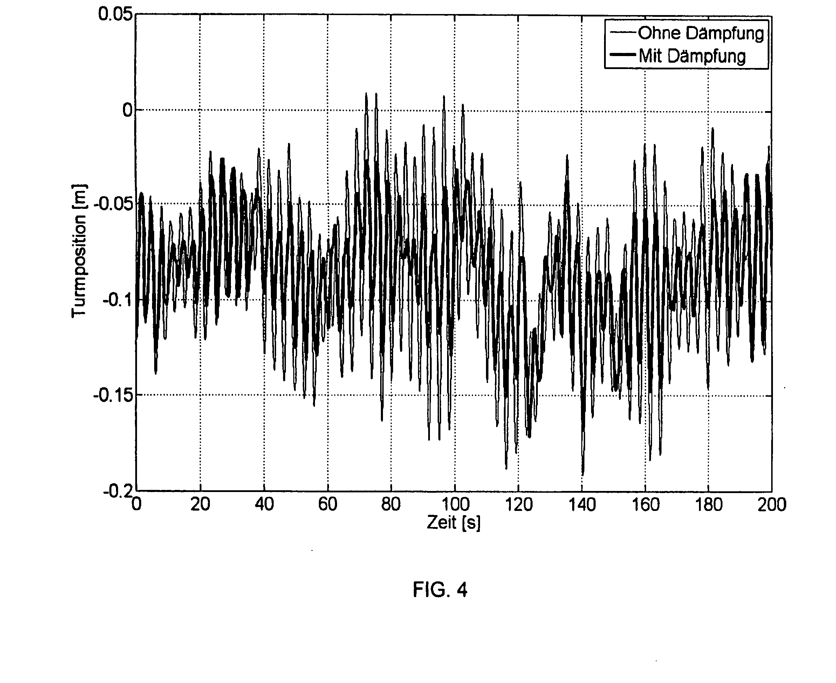

Es hat sich in der Praxis gezeigt, dass durch die individuellen Rotorblattverstellwinkel, bei denen die Rotorblattverstellwinkel aufgrund der berücksichtigten Turmeigenfrequenz eingestellt worden sind, die Turmpositionen deutlich weniger in ihren Auslenkungen bzw. Amplituden über die Zeit schwanken, wie dies in Fig. 4 beispielhaft dargestellt ist.

Die in Figur 4 eingezeichnete Kurve mit den dünneren Linien zeigt den lateralen Verlauf der Turmposition einer Windenergieanlage ohne Dämpfung, während die dickere Linie den Verlauf der lateralen Turmposition mit Dämpfung der seitlichen Turmschwingungen zeigt.

Durch die deutliche Dämpfung der seitlichen Turmschwingungen im Nennbetrieb wird erreicht, dass die Windenergieanlage ohne relevante Beeinflussung der longitudinalen Turmbewegungen und der elektrischen Leistungen betrieben wird. Die Blattwinkel oszillieren dabei sehr gering mit weniger als $\pm\ 1°$.

Durch die Anwendung der erfindungsgemäßen Regelung wird erreicht, dass die Anzahl der Abschaltungen der Windenergieanlagen aufgrund von zu starken lateralen Schwingungen der Türme reduziert wird, wodurch der Ertrag zur Erzeugung von elektrischer Leistung gesteigert wird. Außerdem wird erreicht, dass die Reduktion der Ermüdungslasten des Turms durch seitliche Turmschwingungen im Nennbereich und auch bei Abschaltungen zu einer Lebensdauererhöhung bzw. zu einer Materialeinsparung bei der Errichtung und dem Betrieb einer Windenergieanlage führen.

Da die Schwingungen im Bereich der Eigenfrequenz des Turms während des Betriebs fortlaufend ermittelt werden, führen während der gesamten Betriebsdauer der Windenergieanlage die individuellen ermittelten Rotorblattverstellwinkel, vorzugsweise innerhalb eines vorbestimmten Winkelbereichs von beispielsweise 1°, 2°, 3°, 4° oder 5°, zu einer Reduzierung der lateralen Schwingungen des Turms.

Bezugszeichenliste

| | |
|---|---|
| 11 | Beschleunigungssensor |
| 12 | Auswerteeinheit |
| 13 | Vergleichseinheit |
| 14 | Verstärkereinheit |
| 15 | Transformationseinheit |
| 31 | Pitchregelung |
| 121 | Bandpass |
| 122 | Phasenverschiebungsglied |
| 123 | Notchfilter |
| 124 | Notchfilter |

| | |
|---|---|
| SE | Anregungsgröße |
| $SE_{SOLL}$ | Sollwert |
| $G_{LATOD}$ | Verstärkungsfaktor |
| $y_{in}$ | Eingangswert |
| $R_P$ | Rotorposition |
| $R_{PO}$ | Rotorposition (Offset) |
| IPD1, IPD2, IPD3 | Verstellwinkelkorrekturwert |
| RB1 | Rotorblatt 1 |
| RB2 | Rotorblatt 2 |
| RB3 | Rotorblatt 3 |

RA1, RA2, RA3    Rotorblattachse
GPW              gemeinsamer Blattverstellungswinkel
W                Windenergieanlage
T                Turm

**Patentansprüche**

1. Verfahren zum Betreiben einer Windenergieanlage (W), wobei die Windenergieanlage (W) einen Turm (T) und einen Rotor mit wenigstens zwei mit dem Turm verbundenen Rotorblätter (RB1, RB2, RB3) aufweist, wobei jedes Rotorblatt (RB1, RB2, RB3) jeweils um eine Rotorblattachse (RA1, RA2, RA3) mit einem vorbestimmten Rotorblattverstellwinkel (GPW) einstellbar ist oder eingestellt wird und die Rotorblätter (RB1, RB2, RB3) durch äußere Windbewegungen um eine quer zu den Rotorblattachsen (RA1, RA2 RA3) vorgesehene Rotorachse rotierend angetrieben werden **dadurch gekennzeichnet, dass** der Rotorblattverstellwinkel (GPW) für jedes Rotorblatt (RB1, RB2, RB3) in Abhängigkeit von lateralen Schwingungen des Turms unabhängig und/oder individuell derart verändert wird, dass die Amplitude der, insbesondere durch die äußeren Windbewegungen induzierten, lateralen Schwingungen des Turms (T) gedämpft wird.

2. Verfahren nach Anspruch 1, **dadurch gekennzeichnet, dass** durch die individuellen Veränderungen des Rotorblattverstellwinkels (GPW) der Rotorblätter (RB1, RB2, RB3) eine Querkraft im Rotor erzeugt wird, durch die die lateralen Schwingungen des Turms (T), insbesondere laterale Schwingungen im Bereich einer lateralen Eigenschwingfrequenz des Turms (T), gedämpft werden.

3. Verfahren nach Anspruch 2, **dadurch gekennzeichnet, dass** die Größe der Querkraft in Abhängigkeit von der Amplitude der lateralen Schwingung des Turms im Bereich der Lateralen Turmeigenfrequenz erzeugt wird.

4. Verfahren nach Anspruch 2 oder 3, **dadurch gekennzeichnet, dass** die Rotorblattverstellwinkel (GPW) der Rotorblätter (RB1, RB2, RB3) derart verändert werden, dass die im Rotor erzeugte Querkraft periodisch verändert wird.

5. Verfahren nach einem der Ansprüche 2 bis 4, **dadurch gekennzeichnet, dass** die Querkraft periodisch mit einer Frequenz verändert wird, wobei insbesondere die Frequenz im Bereich der lateralen Turmeigenfrequenz liegt.

6. Verfahren nach Anspruch 5, **dadurch gekennzeichnet, dass** die Phasenlage der periodischen Veränderung der Querkraft von einer Regeleinrichtung so eingestellt wird, dass die Querkraft der lateralen Turmeigenschwingung entgegen wirkt.

7. Verfahren nach einem der Ansprüche 1 bis 6, **dadurch gekennzeichnet, dass** der Rotorblattverstellwinkel (GPW) der Rotorblätter (RB1, RB2, RB3) für jedes Rotorblatt (RB1, RB2, RB3) mittels eines von der Schwingung im Bereich der Eigenschwingungsfrequenz des Turms abhängigen Verstellwinkelkorrekturwertes (IPD1, IPD2, IPD3) berichtigt wird, so dass ein neuer Rotorblattverstellwinkel (TPD1, TPD2, TPD3) für jedes Rotorblatt (RB1, RB2, RB3) ermittelt wird.

8. Verfahren nach Anspruch 7, **dadurch gekennzeichnet, dass** nach Ermittlung der neuen individuellen Rotorblattverstellwinkel (TPD1, TPD2, TPD3) jedes Rotorblatts (RB1, RB2, RB3) die Rotorblätter (RB1, RB2, RB3) mit dem zugehörigen neuen ermittelten Rotorblattverstellwinkel (TPD1, TPD2, TPD3) eingestellt werden.

9. Verfahren nach Anspruch 7 oder 8, **dadurch gekennzeichnet, dass** die individuellen Rotorblattverstellwinkel (TPD1, TPD2, TPD3) der Rotorblätter (RB1, RB2, RB3) fortlaufend und/oder regelmäßig während der Rotation der Rotorblätter (RB1, RB2, RB3) um die Rotorachse geändert oder eingestellt werden.

10. Verfahren nach einem der Ansprüche 1 bis 9, **dadurch gekennzeichnet, dass** die Schwingungen im Bereich der Eigenschwingungsfrequenz des Turms (T) fortlaufend und/oder regelmäßig, vorzugsweise in vorbestimmten Zeitabständen, während des Betriebs der Windenergieanlage (W) ermittelt werden.

11. Verfahren nach einem der Ansprüche 1 bis 10, **dadurch gekennzeichnet, dass** die Rotorblattverstellwinkel (TPD1, TPD2, TPD3) der Rotorblätter (RB1, RB2, RB3) fortlaufend in Abhängigkeit der ermittelten momentanen Schwingung im Bereich der Eigenschwingungsfrequenz des Turms (T) geändert werden.

**12.** Verfahren nach einem der Ansprüche 1 bis 11, **dadurch gekennzeichnet, dass** die Rotorblattverstellwinkel (TPD1, TPD2, TPD3) der Rotorblätter (RB1, RB2, RB3) in Abhängigkeit der um die Rotorachse rotierenden Rotorblattpositionen ($R_P$) der Rotorblätter (RB1, RB2, RB3) geändert werden.

**13.** Verfahren nach einem der Ansprüche 1 bis 12, **dadurch gekennzeichnet, dass** die Schwingungen im Bereich der Eigenschwingungsfrequenz des Turms (T) mittels wenigstens eines Beschleunigungssensors (11) erfasst werden.

**14.** Verfahren nach einem der Ansprüche 1 bis 13, **dadurch gekennzeichnet, dass** anhand der erfassten Schwingungen im Bereich der Eigenschwingungsfrequenz des Turms (T) und eines für jeden Turm (T) vorbestimmten Verstärkungsfaktors ($G_{LATOD}$) ein maximaler Blattverstellwinkelkorrekturwert ermittelt wird.

**15.** Windenergieanlage zur Durchführung des Verfahrens nach einem der Ansprüche 1 bis 14.

**Claims**

**1.** A method of operating a wind turbine generator system (W), wherein the wind turbine generator system (W) includes a tower (T) and a rotor with at least two rotor blades (RB1, RB2, RB3) connected to the tower, wherein each rotor blade (RB1, RB2, RB3) is adjustable or adjusted about a respective rotor blade axis (RA1, RA2, RA3) to a predetermined rotor blade adjustment angle (GPW) and the rotor blades (RB1, RB2, RB3) are driven in rotation by external wind movements about a rotor axis provided transversely to the rotor blade axes (RA1, RA2, RA3), **characterised in that** the rotor blade adjustment angle (GPW) is altered independently and/or individually for each rotor blade (RB 1, RB2, RB3) in dependence on lateral oscillations of the tower such that the amplitude of the lateral oscillations, particularly induced by the external wind movements, of the tower (T) is damped.

**2.** A method as claimed in Claim 1, **characterised in that** as a result of the individual alterations of the rotor blade adjustment angle (GPW) of the rotor blades (RB1, RB2, RB3) a transverse force is produced in the rotor, by which the lateral oscillations of the tower (T), particularly lateral oscillations in the vicinity of a lateral resonant frequency of the tower (T), are damped.

**3.** A method as claimed in Claim 2, **characterised in that** the magnitude of the transverse force is produced in dependence on the amplitude of the lateral oscillation of the tower in the vicinity of the lateral resonant frequency of the tower.

**4.** A method as claimed in Claim 2 or 3, **characterised in that** the rotor blade adjustment angles (GPW) of the rotor blades (RB1, RB2, RB3) are altered such that the transverse force produced in the rotor is altered periodically.

**5.** A method as claimed in one of Claims 2 to 4, **characterised in that** the transverse force is altered periodically with a frequency, wherein, in particular, the frequency lies in the vicinity of the lateral resonant frequency of the tower.

**6.** A method as claimed in Claim 5, **characterised in that** the phasing of the periodic alteration of the transverse force is adjusted by a control device so that the transverse force counteracts the lateral resonant oscillation of the tower.

**7.** A method as claimed in one of Claims 1 to 6, **characterised in that** the rotor blade adjustment angle (GPW) of the rotor blades (RB1, RB2, RB3) is adjusted by means of an adjustment angle correction value (PD1, IPD2, IPD3) dependent on the oscillation in the vicinity of the resonant oscillation frequency of the tower so that a new rotor blade adjustment angle (TPD1, TPD2, TPD3) is determined for each rotor blade (RB1, RB2, RB3).

**8.** A method as claimed in Claim 7, **characterised in that** after determining the new individual rotor blade adjustment angles (TPD1, TPD2, TPD3) for each rotor blade (RB1, RB2, RB3), the rotor blades (RB1, RB2, RB3) are adjusted to the associated, new, determined rotor blade adjustment angles (TPD1, TPD2, TPD3).

**9.** A method as claimed in Claim 7 or 8, **characterised in that** the individual rotor blade adjustment angles (TPD1, TPD2, TPD3) of the rotor blades (RB1, RB2, RB3) are altered or adjusted about the rotor axis continuously and/or regularly during the rotation of the rotor blades (RB1, RB2, RB3).

**10.** A method as claimed in one of Claims 1 to 9, **characterised in that** the oscillations in the vicinity of the resonant oscillation frequency of the tower are determined continuously and/or regularly, preferably at predetermined time intervals, during the operation of the wind turbine generator system (W).

**11.** A method as claimed in one of Claims 1 to 10, **characterised in that** the rotor blade adjustment angles (TPD1, TPD2, TPD3) of the rotor blades (RB1, RB2, RB3) are altered continuously in dependence on the determined, instantaneous oscillation in the vicinity of the resonant oscillation frequency of the tower (T).

**12.** A method as claimed in one of Claims 1 to 11, **characterised in that** the rotor blade adjustment angles (TPD1, TPD2, TPD3) of the rotor blades (RB1, RB2, RB3) are altered in dependence on the positions ($R_P$) of the rotor blades (RB1, RB2, RB3) rotating about the rotor axis.

**13.** A method as claimed in one of Claims 1 to 12, **characterised in that** the oscillations in the vicinity of the resonant oscillation frequency of the tower (T) are detected by means of at least one acceleration sensor (11).

**14.** A method as claimed in one of Claims 1 to 13, **characterised in that** a maximum blade adjustment angle correction value is determined on the basis of the detected oscillations in the vicinity of the resonant oscillation frequency of the tower (T) and an amplification factor ($G_{LATOD}$) predetermined for each tower (T).

**15.** A wind turbine generator system for carrying out the method as claimed in one of Claims 1 to 14.

**Revendications**

**1.** Procédé permettant de faire fonctionner une éolienne (W), dans lequel l'éolienne (W) comporte une tour (T) et un rotor pourvu d'au moins deux pales de rotor (RB1, RB2, RB3) reliées à la tour, chaque pale de rotor (RB1, RB2, RB3) étant réglable ou réglée respectivement autour d'un axe de pale (RA1, RA2, RA3) avec un angle de pas de pales (GPW) prédéterminé et les pales de rotor (RB1, RB2, RB3) étant entraînées en rotation par des mouvements de vent extérieurs autour d'un axe de rotor prévu transversalement aux axes de pales de rotor (RA1, RA2, RA3), **caractérisé en ce que** l'angle de pas (GPW) de chaque pale de rotor (RB 1, RB2, RB3) est modifié en fonction d'oscillations latérales de la tour de façon indépendante et/ou individuelle de façon à amortir l'amplitude des oscillations latérales de la tour (T) induites en particulier par les mouvements de vent extérieurs.

**2.** Procédé selon la revendication 1, **caractérisé en ce que** les modifications individuelles de l'angle de pas (GPW) des pales de rotor (RB1, RB2, RB3) génèrent dans le rotor une force transversale qui amortit les oscillations latérales de la tour (T), en particulier des oscillations latérales dans la plage d'une fréquence propre d'oscillation latérale de la tour (T).

**3.** Procédé selon la revendication 2, **caractérisé en ce que** l'amplitude de la force transversale est générée en fonction de l'amplitude de l'oscillation latérale de la tour dans la plage de la fréquence propre latérale de la tour.

**4.** Procédé selon la revendication 2 ou 3, **caractérisé en ce que** les angles de pas (GPW) des pales de rotor (RB1, RB2, RB3) sont modifiés de façon à modifier périodiquement la force transversale générée dans le rotor.

**5.** Procédé selon l'une des revendications 2 à 4, **caractérisé en ce que** la force transversale est modifiée périodiquement à une fréquence, la fréquence étant située notamment dans la plage de la fréquence propre latérale de la tour.

**6.** Procédé selon la revendication 5, **caractérisé en ce que** la position de phase de la modification périodique de la force transversale est réglée par un dispositif de régulation de façon telle que la force transversale agit à l'encontre de l'oscillation propre latérale de la tour.

**7.** Procédé selon l'une des revendications 1 à 6, **caractérisé en ce que** l'angle de pas (GPW) des pales de rotor (RB 1, RB2, RB3) est corrigé pour chaque pale de rotor (RB 1, RB2, RB3) par une valeur de correction d'angle de pas (IPD1, IPD2, IPD3) qui est fonction de l'oscillation dans la plage de la fréquence propre d'oscillation de la tour, de façon à déterminer un nouvel angle de pas (TPD1, TPD2, TPD3) pour chaque pale de rotor (RB1, RB2, RB3).

**8.** Procédé selon la revendication 7, **caractérisé en ce qu'**après détermination des nouveaux angles de pas (TPD1, TPD2, TPD3) individuels de chaque pale de rotor (RB 1, RB2, RB3), les pales de rotor (RB1, RB2, RB3) sont réglées avec le nouvel angle de pas (TPD1, TPD2, TPD3) déterminé correspondant.

9. Procédé selon la revendication 7 ou 8, **caractérisé en ce que** les angles de pas (TPD1, TPD2, TPD3) individuels des pales de rotor (RB1, RB2, RB3) sont modifiés ou réglés en continu et/ou régulièrement pendant la rotation des pales de rotor (RB1, RB2, RB3) autour de l'axe du rotor.

10. Procédé selon l'une des revendications 1 à 9, **caractérisé en ce que** les oscillations dans la plage de la fréquence propre d'oscillation de la tour (T) sont déterminées en continu et/ou régulièrement, de préférence à intervalles de temps prédéterminés, pendant le fonctionnement de l'éolienne (W).

11. Procédé selon l'une des revendications 1 à 10, **caractérisé en ce que** les angles de pas (TPD1, TPD2, TPD3) des pales de rotor (RB1, RB2, RB3) sont modifiés en continu en fonction de l'oscillation instantanée déterminée dans la plage de la fréquence propre d'oscillation de la tour (T).

12. Procédé selon l'une des revendications 1 à 11, **caractérisé en ce que** les angles de pas (TPD1, TPD2, TPD3) des pales de rotor (RB1, RB2, RB3) sont modifiés en fonction des positions (Rp) des pales de rotor (RB1, RB2, RB3) en rotation autour de l'axe du rotor.

13. Procédé selon l'une des revendications 1 à 12, **caractérisé en ce que** les oscillations sont détectées dans la plage de la fréquence propre d'oscillation de la tour (T) au moyen d'au moins un capteur d'accélération (11).

14. Procédé selon l'une des revendications 1 à 13, **caractérisé en ce qu'**est déterminée, à l'aide des oscillations détectées dans la plage de la fréquence propre d'oscillation de la tour (T) et d'un facteur d'amplification ($G_{LATOD}$) prédéterminé pour chaque tour (T), une valeur de correction maximale de l'angle de pas des pales.

15. Eolienne destinée à mettre en oeuvre le procédé selon l'une des revendications 1 à 14.

FIG.1

FIG. 2

Fig. 3

EP 2 225 461 B1

FIG. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007053031 A1

- EP 1719910 A

**In der Beschreibung aufgeführte Nicht-Patentliteratur**

- Development of Next Generation 2MW Class Large Wind Turbines. **Y.UEDA.** Technical Review. Mitsubishi Heavy Industries Ltd, Oktober 2004, vol. 41